# EUROPÄISCHE PATENTSCHRIFT

(11) **EP 0 744 559 B1**
(45) Veröffentlichungstag und Bekanntmachung des Hinweises auf die Patenterteilung: **07.07.1999**
(21) Anmeldenummer: 96106502.6
(22) Anmeldetag: 25.04.1996
(51) Int. Cl.: F16D 65/097, F16D 65/02, F16D 55/02

(54) **Belaghalterung an Scheibenbremsen für Strassenfahrzeuge**
Pad retaining system in disc brakes for road vehicles
Fixation de garnitures de freins à disque pour véhicules routiers

(30) Priorität: 29.04.1995 DE 19515841
(43) Veröffentlichungstag der Anmeldung: 27.11.1996
(73) Patentinhaber: BPW Bergische Achsen Kommanditgesellschaft, 51674 Wiehl (DE)
(72) Erfinder: Flick, Joachim, Dipl.-Ing., 42499 Hückeswagen (DE)
(74) Vertreter: Stenger, Watzke & Ring Patentanwälte

(56) Entgegenhaltungen:
- EP-A- 0 248 385
- DE-A- 3 612 355
- DE-A- 4 020 287
- US-A- 4 049 087

## Beschreibung

Die Erfindung betrifft eine Belaghalterung an Scheibenbremsen für Straßenfahrzeuge, insbesondere Nutzfahrzeuge, mit in einem Bremssattel zu beiden Seiten der Bremsscheibe ausgebildeten Belagschächten, in denen jeweils ein mit einem Bremsbelag versehener Belagträger angeordnet ist, der durch eine sich an einem Haltebügel abstützende und mit ihren Enden auf den Rücken des Belagträgers wirkende Blattfeder in seiner Arbeitsstellung im Belagschacht gehalten ist, wobei die Blattfeder über an ihren Enden ausgebildete Abrundungen in Längsrichtung auf dem Belagträger positioniert und mit klemmend auf die einander gegenüberliegenden Seitenflächen des Belagträgers wirkenden Laschen versehen ist.

Eine Belaghalterung an Scheibenbremsen der voranstehend beschriebenen Art ist aus der EP 0 248 385 A1 bekannt. Die Blattfeder ist hierbei an ihren Enden über dort ausgebildete Abrundungen in Längsrichtung auf dem Belagträger formschlüssig fixiert. Zu diesem Zweck ist eine Tragplatte mit entsprechend ausgerundeten Vertiefungen versehen. Damit ist es erforderlich, den Belagträger mit exakt hergestellten Vertiefungen auszubilden und die Länge der Blattfeder sowie deren Endabschnitte wiederum exakt auf die Abmessungen des Belagträgers abzustellen, um die gewünschte formschlüssige Halterung der Blattfeder auf dem Belagträger zu erzielen. Bei der Blattfeder vorgesehene Laschen wirken zwar in der Art von Klemmfedern, dienen jedoch nicht der Halterung der Blattfeder auf dem Belagträger, sondern wirken in der Art von Schwingungsdämpfern.

Der Erfindung liegt die **Aufgabe** zugrunde, die den Belagträger halternde Blattfeder der bekannten Belaghalterung hinsichtlich ihrer Gestaltung und Handhabung zu vereinfachen.

Die **Lösung** dieser Aufgabenstellung durch die Erfindung ist dadurch gekennzeichnet, daß die Blattfeder ausschließlich durch an ihren Enden ausgebildete Klemmfedern kraftschlüssig auf dem Belagträger gehalten ist.

Durch die gemäß der Erfindung ausschließlich kraftschlüssige Halterung der Blattfeder auf dem Belagträger entfallen aufwendige und damit teuere Bearbeitungen einerseits des Belagträgers und andererseits der Blattfeder. Die kraftschlüssige Halterung ermöglicht weiterhin ein einfaches Aufsetzen der Blattfeder auf den Belagträger. Schließlich ergeben die erfindungsgemäßen Klemmfedern eine erheblich bessere Dämpfung bei auftretenden Schwingungen, weil sie anders als die Laschen der aus der EP 0 248 385 A1 bekannten Konstruktion nicht in einem Knotenpunkt der Biegelinie der Blattfeder angeordnet sind, sondern am Ende der Blattfeder ihre volle Wirksamkeit als Schwingungsdämpfer entfalten.

Durch die ausschließlich kraftschlüssige Halterung der Blattfeder auf dem Belagträger gemäß der Erfindung wird schließlich die Möglichkeit einer automatischen Federmontage geschaffen, da die Blattfeder lediglich von oben her auf die Kante des Belagträgers aufgesetzt werden muß. Bei der aus der gattungsbildenden Druckschrift bekannten Konstruktion ist es dagegen erforderlich, zuerst einen der abgerundeten Endabschnitte der Blattfeder in eine der Vertiefungen einzulegen und dann bei gleichzeitigem Verbiegen der Blattfeder das andere Ende in den gegenüberliegenden Endabschnitt einzufädeln. Eine Umsetzung dieser Montage durch ein automatisches Verfahren ist erheblich aufwendiger als die Montage der erfindungsgemäß ausgebildeten Blattfeder.

Gemäß einem weiteren Merkmal der Erfindung können die Klemmfedern einstückig mit der Blattfeder ausgebildet werden. Bei einer bevorzugten Ausgestaltung der Erfindung werden die Klemmfedern durch gegenüber dem jeweiligen Blattfederende zu beiden Seiten abgewinkelte Ansätze und an den Ansätzen angeformte, als Federzungen ausgebildete Verlängerungen gebildet.

Diese Ausgestaltung schafft die Möglichkeit, den einstückig mit der Blattfeder ausgebildeten Klemmfedern durch entsprechende Ausgestaltung der Federzungen jede gewünschte Klemmkraft zu geben. Die abgewinkelten Ansätze dienen hierbei der seitlichen Führung der Blattfeder bei der Relativbewegung des Belagträgers gegenüber dem Belagschacht und verhindern ein schädliches Kippen der Blattfeder auf dem Belagträger.

Um scharfkantige Enden sowohl der Blattfeder als auch der Federzungen zu vermeiden, die nicht nur Beschädigungen hervorrufen, sondern auch zu Verhakungen am Belagträger führen können, wird mit der Erfindung schließlich vorgeschlagen, die Enden der als Federzungen ausgebildeten Verlängerungen jeweils mit einer auslaufenden Abrundung auszubilden.

Auf der Zeichnung ist ein Ausführungsbeispiel der Erfindung dargestellt, und zwar zeigt:
- Fig. 1: eine Ansicht eines mit einer erfindungsgemäßen Blattfeder versehenen Belagträgers und
- Fig. 2: eine Draufsicht auf den Belagträger und die Blattfeder gemäß Fig. 1.

Die beiden Abbildungen zeigen einen Belagträger 1 einer im übrigen nicht dargestellten Scheibenbremse für Straßenfahrzeuge. Der Belagträger 1 ist auf einer Seite mit einem Bremsbelag 2 versehen. Er wird in einen Belagschacht eines nicht dargestellten Bremssattels derart eingesetzt, daß sein Bremsbelag 2 einer Seitenfläche der ebenfalls nicht dargestellten Bremsscheibe zugewandt ist.

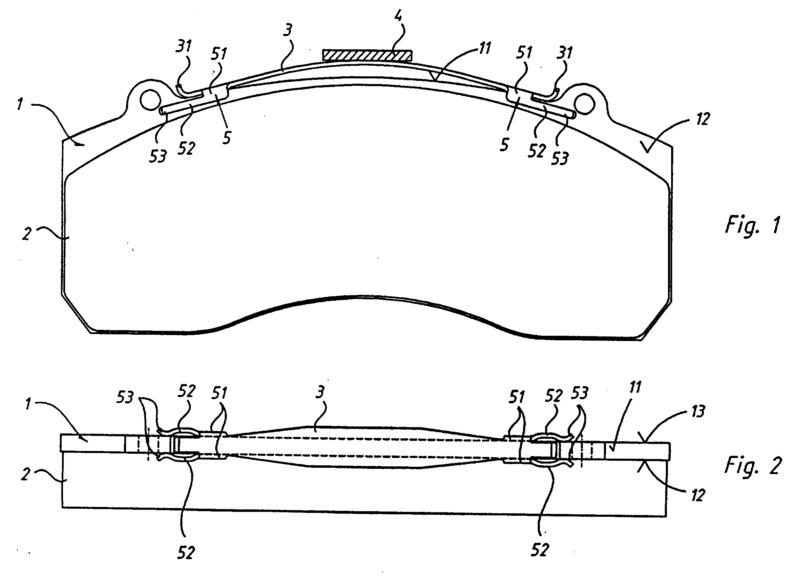

Um den Belagträger in seiner Arbeitsstellung im Belagschacht zu halten, ist er mit einer Blattfeder 3 versehen, die mit ihren Enden auf den Rücken 11 des Belagträgers 1 wirkt und die sich in ihrem Mittenbereich ihrerseits an einem Haltebügel 4 abstützt, der im Querschnitt in Fig. 1 eingezeichnet ist.

Die Blattfeder 3 ist an beiden Enden jeweils mit einer auf die einander gegenüberliegenden Seitenflächen 12 und 13 des Belagträgers 1 wirkenden Klemmfeder 5 versehen, durch welche die Blattfeder 3 kraftschlüssig am Belagträger 1 gehalten ist. Beim dargestellten Ausführungsbeispiel sind die Klemmfedern 5 einstückig mit der Blattfeder 3 ausgebildet.

Diese einstückige Ausbildung der Klemmfedern 5 mit der Blattfeder 3 wird beim Ausführungsbeispiel dadurch erreicht, daß im Bereich jedes Blattfederendes zu beiden Seiten Ansätze 51 an die Blattfeder 3 angeformt sind, die etwa rechtwinklig in Richtung auf den Belagträger 1 abgewinkelt sind. An diese Ansätze 51 sind Verlängerungen 52 angeformt, die klemmend auf jeweils eine Seitenfläche 12 bzw. 13 des Belagträgers 1 in der Art von Federzungen einwirken. Durch die geeignete Länge und Form dieser als Federzungen wirkenden Verlängerungen 52 kann die jeweils benötigte Klemmkraft bestimmt werden. Die abgewinkelten Ansätze 51 dienen hierbei der seitlichen Führung der Blattfeder 3 bei der Relativbewegung des Belagträgers 1 gegenüber dem Belagschacht und verhindern ein schädliches Kippen der Blattfeder 3 auf dem Belagträger 1.

Um das Entstehen scharfkantiger Enden zu vermeiden, die sowohl Beschädigungen hervorrufen als auch zu Verhakungen mit dem Belagträger 1 führen können, sind die Enden der Blattfeder 3 mit auslaufenden Abrundungen 31 versehen. Auch die als Federzungen der Klemmfeder 5 dienenden Verlängerungen 52 sind mit auslaufenden Abrundungen 53 ausgeführt, wie insbesondere aus Fig. 2 hervorgeht.

Die voranstehend beschriebene Blattfeder 3 kann auf einfache Weise auf den Belagträger 1 aufgesetzt werden, indem ihre Klemmfedern 5 von oben her auf den Rücken 11 des Blattträgers 1 aufgesetzt werden. Die als Federzungen wirkenden Verlängerungen 52 der Klemmfedern 5 liegen hierbei an den Seitenflächen 12 und 13 des Blattträgers 1 an und bewirken hierdurch ein kraftschlüssiges Festhalten der Blattfeder 3 am Belagträger 1. Auch ein Entfernen der Blattfeder 3 vom Belagträger 1 ist problemlos durch einfaches Abziehen der Klemmfedern 5 möglich.

### Bezugszeichenliste:

- 1: Belagträger
- 2: Bremsbelag
- 3: Blattfeder
- 4: Haltebügel
- 5: Klemmfeder
- 11: Rücken
- 12: Seitenfläche
- 13: Seitenfläche
- 31: Abrundung
- 51: Ansatz
- 52: Verlängerung
- 53: Abrundung

## Patentansprüche

1. Belaghalterung an Scheibenbremsen für Straßenfahrzeuge, insbesondere Nutzfahrzeuge, mit in einem Bremssattel zu beiden Seiten der Bremsscheibe ausgebildeten Belagschächten, in denen jeweils ein mit einem Bremsbelag (2) versehener Belagträger (1) angeordnet ist, der durch eine sich an einem Haltebügel (4) abstützende und mit ihren Enden auf den Rücken des Belagträgers (1) wirkende Blattfeder (3) in seiner Arbeitsstellung im Belagschacht gehalten ist, wobei die Blattfeder (3) über an ihren Enden ausgebildete Abrundungen (31) in Längsrichtung auf dem Belagträger (1) positioniert und mit klemmend auf die einander gegenüberliegenden Seitenflächen (12,13) des Belagträgers (1) wirkenden Laschen versehen ist,
**dadurch gekennzeichnet,**
daß die Blattfeder (3) ausschließlich durch an ihren Enden ausgebildete Klemmfedern (5) kraftschlüssig auf dem Belagträger (1) gehalten ist.

2. Belaghalterung nach Anspruch 1, dadurch gekennzeichnet, daß die Klemmfedern (5) einstückig mit der Blattfeder (3) ausgebildet sind.

3. Belaghalterung nach Anspruch 1 und 2, dadurch gekennzeichnet, daß die Klemmfedern (5) durch gegenüber dem jeweiligen Blattfederende zu beiden Seiten abgewinkelte Ansätze (51) und an den Ansätzen (51) angeformte, als Federzungen ausgebildete Verlängerungen (52) gebildet sind.

4. Belaghalterung nach mindestens einem der Ansprüche 1 bis 3, dadurch gekennzeichnet, daß die Enden der als Federzungen ausgebildeten Verlängerungen (52) jeweils mit einer auslaufenden Abrundung (53) ausgebildet sind.

## Claims

1. Pad retention system in disc brakes for road vehicles, in particular commercial vehicles, having, in a brake calliper, pad shafts which are formed on both sides of the brake disc and in which there is in each case arranged a brake support (1) which is provided with a brake pad (2) and is held in its operating position in the pad shaft by means of a leaf spring (3) which is supported on a retaining bracket (4) and with its ends acts on the spine of the pad support (1), the leaf spring (3) being positioned, via rounded portions (31) formed on its ends, in the longitudinal direction on the pad support (1) and being provided with clips which act in a clamping manner on those side surfaces (12, 13) of the pad support (1) which lie opposite one another, characterized in that the leaf spring (3) is retained non-positively on the pad support (1) solely by clamping springs (5) formed on its ends.

2. Pad retention system according to Claim 1, characterized in that the clamping springs (5) are formed in one piece with the leaf spring (3).

3. Pad retention system according to Claim 1 and 2, characterized in that the clamping springs (5) are formed by shoulders (51) which are offset on both sides with respect to the particular leaf spring end and by extensions (52) which are moulded onto the shoulders (51) and are designed as spring tongues.

4. Pad retention system according to at least one of Claims 1 to 3, characterized in that the ends of the extensions (52), which are designed as spring tongues, are in each case formed with a tapering-off rounded portion (53).

## Revendications

1. Fixation de garnitures de freins à disque pour véhicules routiers, notamment pour véhicules utilitaires, comportant des logements de garnitures agencés dans un étrier de frein des deux côtés du disque de frein, dans lesquels est disposé un support de garniture (1) muni d'une garniture de frein (2), lequel est maintenu dans sa position de travail par un ressort à lame (3) qui prend appui sur un étrier de retenue (4) et dont les extrémités agissent sur le dos du support de garniture (1), le ressort à lame (3) étant positionné dans la direction longitudinale sur le support de garniture (1) par l'intermédiaire d'arrondis (31) agencés au niveau de ses extrémités, et étant muni d'éclisses exerçant un effet de serrage sur les faces latérales opposées (12, 13) du support de garniture (1),
caractérisée en ce que
le ressort à lame (3) est fixé exclusivement par adhérence de force sur le support de garniture (1) par des ressorts de serrage (5) formés sur ses extrémités.

2. Fixation de garnitures selon la revendication 1, caractérisée en ce que les ressorts de serrage (5) sont réalisés d'un seul tenant avec le ressort à lame (3).

3. Fixation de garnitures selon les revendications 1 et 2, caractérisée en ce que les ressorts de serrage (5) sont formés par des appendices (51) coudés des deux côtés par rapport à chaque extrémité du ressort à lame, et par des prolongements (52) formés sur les appendices (51) en tant que languettes élastiques.

4. Fixation de garnitures selon l'une au moins des revendications 1 à 3, caractérisée en ce les extrémités des prolongements (52) réalisés en tant languettes élastiques se terminent par un arrondi (53).
